Europäisches Patentamt

European Patent Office

Office européen des brevets

(19)

(11) Veröffentlichungsnummer: **0 027 999**
**B1**

(12) **EUROPÄISCHE PATENTSCHRIFT**

(45) Veröffentlichungstag der Patentschrift: **13.06.84**

(51) Int. Cl.³: **H 04 M 1/06**

(21) Anmeldenummer: **80106422.1**

(22) Anmeldetag: **21.10.80**

(54) Telefon-Handapparat für ein Funkgerät für den mobilen Einsatz.

(30) Priorität: **26.10.79 DE 2943374**

(43) Veröffentlichungstag der Anmeldung:
**06.05.81 Patentblatt 81/18**

(45) Bekanntmachung des Hinweises auf die Patenterteilung:
**13.06.84 Patentblatt 84/24**

(84) Benannte Vertragsstaaten:
**AT BE CH DE LI LU NL SE**

(56) Entgegenhaltungen:
DE - B - 1 149 398
DE - C - 955 872
FR - A - 925 218
FR - A - 1 052 695
GB - A - 718 772
US - A - 3 396 244
US - A - 4 034 167

Rev. of the Electr. Com. Labs. Vol. 25, Nr. 11-12,
Dec. 77, Seiten 1288-1296

(73) Patentinhaber: **SIEMENS AKTIENGESELLSCHAFT**
**Berlin und München Wittelsbacherplatz 2**
**D-8000 München 2 (DE)**

(72) Erfinder: **Wirth, Roland, Dipl.-Ing.**
**Bergstrasse 20**
**D-8035 Gauting (DE)**
Erfinder: **Wangen, Jan-Ole**
**Tokerudveien 59**
**Oslo 10 (NO)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf einen Telefon-Handapparat mit einem in den Handapparat integrierten elektrischen Umschaltmittel für die selbsttätige Schaltungsänderung innerer Stromwege für ein Funkgerät für den mobilen Einsatz, das sowohl in Abhängigkeit des Auflegens bzw. Abnehmens des Handapparates als auch im abgenommenen Zustand des Hand apparates betätigbar ist.

Durch die Literaturstelle Rev. of the Electr. Com. Laboratories, Volume 25, Nr. 11—12, Nov—Dez. 1977, Seiten 1288 bis 1296, sind Mobilfunkgeräte bekannt, denen der Handapparat in üblicher Weise über ein spiralförmig gestaltetes Kabel mit der Handapparat-Auflage verbunden ist, die ihrerseits wiederum mit dem Transceiver über Leitungen verbunden ist. Die Handapparat-Auflage enthält in üblicher Weise einen den Wählvorgang freigebenden bzw. sperrenden Umschaltkontakt, der in Abhängigkeit des Auflegens bzw. Abhebens des Handapparates betätigt wird.

Bei der Installation eines solchen Funkgerätes für Funkfernsprechen in einem Personenwagen ergeben sich gewisse Schwierigkeiten hinsichtlich der Flexibilität in der Bedienung dann, wenn, wie das für das Nordische Mobilfunknetz vorgesehen ist, die Wahl nur dann durchgeführt werden kann, wenn der Handapparat aufgelegt, d.h. also der Umschaltkontakt in der Handapparat-Auflage betätigt ist. Der Handapparat kann in diesem Falle nur von der Person bzw. den Personen bedient werden, für die ein unmittelbarer Zugriff zur Handapparat-Auflage gegeben ist. Eine Bedienung durch Personen, die sich auf den Rücksitzen befinden, ist also nicht möglich, wenn die Handapparat-Auflage im Bereich der Vordersitze des Personenwagens installiert ist.

Durch die US—PS 3 396 244 ist ein Telefon-Handset für einen über Leitungen mit der Vermittlungsstelle verbundenen Telefonapparat bekannt, mit den eine mehrfache Nummernwahl ohne vorheriges Auflegen des Handsets auf den Telefonapparat möglich ist, der mit einem Leitungsschalter im Telefonapparat in Serie geschaltet ist. Mit diesem kann ein erstes Gespräch beendet und der Zustand für den Verbindungsaufbau eines zweiten Gespräches hergestellt werden.

Ferner ist durch die US—PS 4 034 167 eine Telefoneinrichtung bekannt, bei der ein elektrisches Umschaltmittel im Handapparat angeordnet ist, das an der Bedienseite aus dem Gehäuse herausgeführt ist. Mittels eines auf den Handapparat aufschiebbaren Bandes, das den Handapparat im Bereich des Schalters umschließt, wird dieser Schalter im abgenommenen Zustand des Handapparates betätigt.

Der Erfindung liegt die Aufgabe zugrunde, für einen Telefon-Handapparat der einleitend beschriebenen Art eine weitere Lösung anzugeben, die die bei bekannten Anordnungen vorhandenen geschilderten Nachteile vermeidet.

Diese Aufgabe wird mit einer ersten Ausführungsform gemäß der Erfindung dadurch gelöst, daß das Umschaltmittel ein Reed-Relaiskontakt ist, der im aufgelegten Zustand des Handapparates durch einen an der Handapparat-Auflage befestigten Permanentmagnet betätigt ist, und daß am Handapparat ein verschiebbarer Permanentmagnet vorgesehen ist, der in seiner Schieberarbeitsstellung den Reed-Relaiskontakt betätigt, und daß der verschiebbare Permanentmagnet beim Auflegen des Handapparates durch einen Anschlag an der Handapparat-Auflage automatisch in seine Schieberruhestellung zurückkehrt, sofern er sich im abgenommen Zustand in seiner Schieberarbeitsstellung befunden hat.

Gemäß einer weiteren erfindungsgemäßen Ausführungsform nach dem Gattungsbegriff des Anspruchs 2 ist vorgesehen, daß das Umschaltmittel ein Mikroschalter ist und daß das verschiebbare Teil beim Auflegen des Handapparates durch einen Anschlag an der Handapparat-Auflage automatisch in seine Schieberruhestellung zurückkehrt, sofern es sich im abgenommenen Zustand in seiner Schieberarbeitsstellung befunden hat.

Die Integration des Umschaltkontaktes in den Handapparat selbst schafft die außerordentlich vorteilhafte Möglichkeit, den elektrischen Zustand "Handapparat aufgelegt" bzw. "Handapparat abgenommen" von jeder Person innerhalb eines Personenwagens auch dann herbeizuführen, wenn sie den Handapparat in Händen hält. Somit ist es möglich, bei einer Anordnung der Handapparat-Auflage im Bereich der Vordersitze mit dem Handapparat vom Rücksitz aus eine Wahl auch dann durchzuführen, wenn hierbei die Forderung "Handapparat aufgelegt" besteht. Ferner hat die Integration des Umschaltkontaktes in den Handapparat den großen Vorteil, daß zwischen der Handapparat-Auflage und dem eigentlichen Funkgerät keine elektrischen Verbindungen mehr bestehen müssen. Der Handapparat kann also mit seiner spiralförmigen Verbindungsschnur unmittelbar mit dem Transceiver verbunden sein, wobei die Verdrahtung des Umschaltkontaktes ebenfalls über die spiralförmige Verbindungsschnur herbeigeführt ist.

Nachstehend wird die Erfindung anhand von in der Zeichnung dargestellten Ausführungsbeispielen näher erläutert.

In der Zeichnung bedeuten:

Fig. 1 eine schematische Darstellung eines Funkgerätes

Fig. 2 eine schematische Darstellung eines Ausschnittes des Handapparates mit einem Mikroschalter

Fig. 3 eine schematische Darstellung eines Teils des Handapparates mit einem Reed-Relaiskontakt.

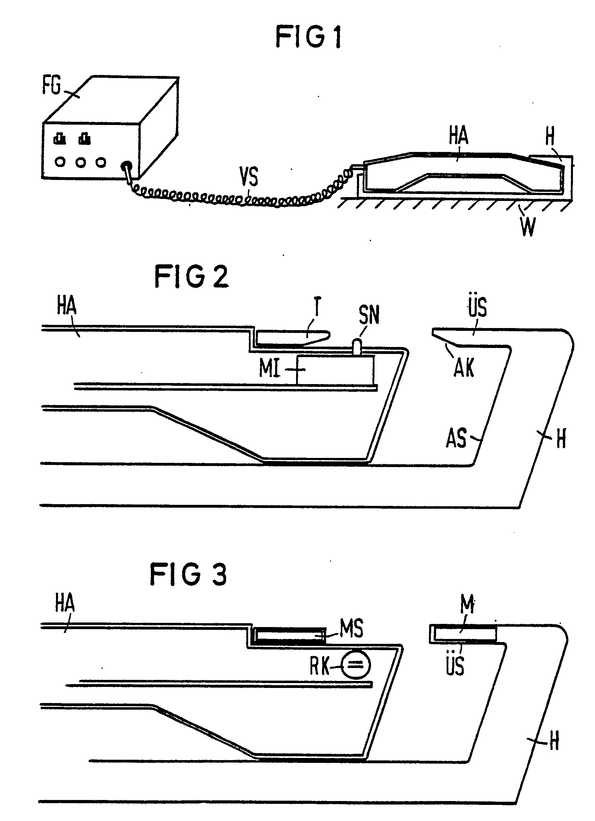

Bei dem in Fig. 1 dargestellten Funkgerät ist der Transceiver mit FG, die Handapparat-Auflage mit H und der Handapparat mit HA angegeben. Auf dem Rücken des Handapparates HA ist — in der Zeichnung nicht sichtbar — die Wähltastatur untergebracht. Die Handapparat-Halterung H dient hier lediglich der Ablage des Handapparates. Sie weist keine elektrischen Teile mehr auf, was für die Installation in einem Fahrzeug erhebliche Vorteile mit sich bringt. Der Handapparat HA ist durch das spiralförmige Verbindungskabel VS unmittelbar mit dem Transceiver FG verbunden. Dies ist, wie bereits ausgeführt worden ist, dadurch möglich, daß der bei bekannten Ausführungen in der Handapparat-Halterung vorgesehene Umschaltkontakt in den Handapparat HA integriert ist.

Wie die Ausführungsform in Fig. 2 zeigt, ist hier der Umschaltkontakt im Handapparat HA ein Mikroschalter MI, der auf seiten des Mikrofons des Handapparats angeordnet ist und mit seinem Schaltnippel SN aus dem Handapparatsgehäuse nach oben herausragt. Das Gehäuse des Handapparats HA ist auf dieser Seite in Form einer Längsnut abgesetzt, in der der Schieber T bewegbar angeordnet ist. Mittels des Schiebers T kann der Mikroschalter über seinen Schaltnippel SN betätigt werden und auf diese Weise bei aus der Handapparat-Halterung H herausgenommenem Handapparat HA der Schaltzustand "Handapparat aufgelegt" jederzeit herbeigeführt werden.

Die Handapparat-Auflage H weist am dargestellten Ende einen Überstand ÜS auf, der an seinem freien Ende an der Unterseite eine Auflaufkante AK aufweist. Beim Einführen des Handapparates HA in die Handapparat-Auflage H bis zum Anschlag AS wird der Schaltnippel SN ebenfalls betätigt, so daß der Mikroschalter M im aufgelegten Zustand des Handapparats stets den Schaltzustand "Handapparataufgelegt" einnimmt. Sofern vor dem Auflegen der Schieber T sich über dem Schaltnippel SN (Schieberarbeitsstellung) befunden hat, wird er beim Einführen des Handapparats in die Handapparat-Halterung H automatisch in die in Figur 2 dargestellte Schieberruhestellung zurückgeschoben.

Figur 3 zeigt eine zu Figur 2 entsprechende Anordnung für den Fall, in dem anstelle eines Mikroschalters MI ein Reed-Relaiskontakt RK vorgesehen ist. In diesem Falle ist in das freie Ende des Überstandes ÜS der Handapparat-Auflage H ein Permanentmagnet M eingelassen, der den Reed-Relaiskontakt RK im eingeführten Zustand des Handapparates HA in die Handapparat-Auflage H betätigt. Für die Betätigung des Reed-Relaiskontaktes RK bei aus der Handapparat-Halterung H herausgenommenem Handapparat HA ist anstelle des Schiebers T ein verschiebbarer Permanentmagnet MS vorgesehen.

**Patentansprüche**

1. Telefon-Handapparat mit einem in den Handapparat (HA) integrierten elektrischen Umschaltmittel für die selbsttätige Schaltungsänderung innerer Stromwege für ein Funkgerät für den mobilen Einsatz, das sowohl in Abhängigkeit des Auflegens bzw. Abnehmens des Handapparates als auch im abgenommenen Zustand des Handapparates betätigbar ist, dadurch gekennzeichnet, daß das Umschaltmittel ein Reed-Relaiskontakt (RK) ist, der im aufgelegten Zustand des Handapparates (HA) durch einen an der Handapparat-Auflage (H) befestigten Permanentmagnet (M) betätigt ist, und daß am Handapparat (HA) ein verschiebbarer Permanentmagnet (MS) vorgesehen ist, der in seiner Schieberarbeitsstellung den Reed-Relaiskontakt (RK) betätigt, und daß der verschiebbare Permanentmagnet beim Auflegen des Handapparates (HA) durch einen Anschlag an der Handapparat-Auflage (H) automatisch in seine Schieberruhestellung zurückkehrt, sofern er sich im abgenommenen Zustand in seiner Schieberarbeitsstellung befunden hat (Fig. 3).

2. Telefon-Handapparat mit einem in den Handapparat (HA) integrierten elektrischen Umschaltmittel für die selbsttätige Schaltungsänderung innerer Stromwege für ein Funkgerät für den mobilen Einsatz, das sowohl in Abhängigkeit des Auflegens bzw. Abnehmens des Handapparates als auch im abgenommenen Zustand des Handapparates betätigbar ist, und aus einem Schalter besteht, dessen aus dem Gehäuse des Handapparates herausgeführter Schaltnippel (SN) im aufgelegten Zustand des Handapparates im Sinne einer Betätigung des Schalters gegen eine Auflaufkante (AK) der Handapparat-Auflage (H) gedrückt ist, und wobei am Handapparat ein verschiebbares Teil (T) vorgesehen ist, das in seiner Schieberarbeitsstellung den Schalter über seinen Schaltnippel hinweg betätigt, dadurch gekennzeichnet, daß das Umschaltmittel ein Mikroschalter (MI) ist und daß das verschiebbare Teil (T) beim Auflegen des Handapparates (HA) durch einen Anschlag (AS) an der Handapparat-Auflage (H) automatisch in seine Schieberruhestellung zurückkehrt, sofern es sich im abgenommenen Zustand in seiner Schieberarbeitsstellung befunden hat (Fig. 2).

**Revendications**

1. Combiné téléphonique (HA), dans lequel est intégré un moyen de commutation électrique qui sert à modifier automatiquement le circuit de voies de courant internes pour un appareil radio pour une utilisation mobile et qui peut être actionné tant en fonction du raccrochage que de décrochage du combiné ainsi que lorsque le combiné est à l'état décroché, caractérisé par le fait que le dispositif de commutation est un contact de relais à lames (RK) qui, lorsque le combiné (HA) est raccroché, est actionné par un aimant permanent (M) fixé au support (H) du combiné, et qu'il est prévu sur le combiné (H) un aimant permanent mobile (MS) qui, dans sa position de travail en coulisseau, actionne le contact (RA) du relais à lames, et que, lors du raccrochage du combiné (HA), l'aimant permanent mobile est ramené automatiquement dans sa position de repos, en coulisseau, par une butée présente sur le support (H) du combiné, dans la mesure où ledit aimant se trouvait dans la position de travail en coulisseau, alors que le combine état décroché (figure 3).

2. Combiné téléphonique (HA), dans lequel est intégré un moyen de commutation électrique qui sert à modifier automatiquement le circuit de voies de courant internes pour un appareil radio pour une utilisation mobile et qui peut être actionné tant en fonction du raccrochage que du décrochage du combiné ainsi que lorsque le combiné est à l'état décroché, et qui est constitué par un commutateur, dont le téton de commutation (SN) sortant hors du boîtier du combiné est repoussé dans le sens d'un actionnement du commutateur contre un bord en forme de rampe (AK) du support (S) du combiné, lorsque ce dernier est à l'état raccroché, et dans lequel il est prévu sur le combiné une partie mobile (T) qui amène le commutateur, par l'intermédiaire de son téton de commutation, dans sa position de travail en coulisseau, caractérisé par le fait que le moyen de commutation est un micro-interrupteur (MI) et que lors du raccrochage du combiné (HA), la partie mobile (A) est ramenée automatiquement dans sa position de repos en coulisseau, par une butée (AS) prévue sur le support (H) du combiné, dans la mesure où ladite partie mobile se trouvait dans sa position de travail en coulisseau, alors que le combiné était décroché (figure 2).

## Claims

1. A telephone handset having integrated into the handset (HA) an electrical switching means, for automatic changing of inner current paths in a mobile radio apparatus, operable both in dependence upon the replacing and/or the lifting of the handset and also in the lifted state of the hand set, characterised in that the switching means is a reed-relay contact (RK) which is operated by a permanent magnet (M) secured to the handset support (H) when the handset (HA) is replaced, and that on the handset (HA) a displaceable permanent magnet (MS) is arranged which actuates the reed-relay contact (RK) when slid to an operating position, and that on replacing the handset (HA), the displaceable permanent magnet (RK) is automatically returned to its rest position by a stop on the handset support (H) if it was in its slide operating position in the lifted state (Fig. 3).

2. A telephone handset having integrated into the handset (HA) an electrical switch for the automatic changing of inner current paths in a mobile radio apparatus, operable both in dependence upon the replacing and/or lifting the handset and also in the lifted state of the handset, the switch having a switching nipple (SN) extending out of the handset housing and being pressed against a contact edge (AK) of the handset support (H) so as to operate the switch when the handset is in the replaced state, and where a displaceable component (T) is arranged on the handset to operate the switching nipple when slid to its operating position, characterised in that the switch is a micro-switch (MI) and that on replacing the handset (HA) the displaceable component (T) is automatically returned to its rest position by a stop (AS) on the handset support (H) if it was in its operating position in the lifted state (Fig. 2).

FIG 1

FIG 2

FIG 3